# FASCICULE DE BREVET EUROPEEN

(11) **EP 4 363 295 B1**
(45) Date de publication et mention de la délivrance du brevet: **04.02.2026**
(21) Numéro de dépôt: 22741354.9
(22) Date de dépôt: 21.06.2022
(51) Int. Cl.: B62D 25/18

(54) **DISPOSITIF DE PROTECTION ANTIPROJECTION POUR ENGIN ROULANT ET ENSEMBLE COMPRENANT UN TEL DISPOSITIF**
SPRITZSCHUTZVORRICHTUNG FÜR EIN RADFAHRZEUG UND ANORDNUNG MIT SOLCH EINER VORRICHTUNG
SPLASHGUARD DEVICE FOR A WHEELED VEHICLE AND ASSEMBLY COMPRISING SUCH A DEVICE

(30) Priorité: 01.07.2021 FR 2107165
(43) Date de publication de la demande: 08.05.2024
(73) Titulaire: R-PI, 85200 Fontenay Le Comte (FR)
(72) Inventeur: REUS, Pierre, 44000 NANTES (FR)
(74) Mandataire: Ipsilon
(86) Numéro de dépôt international: PCT/FR2022/051198
(87) Numéro de publication internationale: WO 2023/275455

(56) Documents cités:
- EP-A2- 0 125 072
- US-A- 5 582 431
- US-A1- 2018 273 113

## Description

La présente invention concerne un dispositif de protection antiprojection pour engin roulant comprenant au moins une roue d'appui au sol, ainsi qu'un ensemble comprenant un tel dispositif.

Elle concerne en particulier, un dispositif de protection antiprojection pour engin roulant comprenant au moins une roue d'appui au sol, le dispositif comprenant un écran antiprojection, apte à être disposé au moins partiellement à l'arrière de la roue, et un bâti support de l'écran, l'écran antiprojection présentant un bord supérieur, un bord inférieur et deux bords latéraux, cet écran antiprojection présentant une face apte à être tournée vers la roue à protéger et une face opposée appelée dos de l'écran, l'écran étant monté mobile par rapport au bâti support pour permettre, à l'état couplé du dispositif à l'engin, un déplacement de l'écran entre deux positions, l'une, dite haute, écartée du sol, l'autre, dite basse, rapprochée du sol, l'écran comprenant au moins une partie souple déformable perméable à l'eau formée d'un ensemble d'éléments discrets souples allongés, tels que des poils disposés côte à côte à la manière d'une brosse, chaque élément discret présentant une extrémité libre, au moins une partie des éléments discrets formant par leur extrémité libre le bord inférieur de l'écran et se développant en direction du bord supérieur de l'écran.

Les projections provoquées, à l'arrière de l'engin, par un engin roulant sur route mouillée sont, depuis de nombreuses années, source d'accidents. La présence de bavette ou de garde-boue entourant au moins partiellement la ou les roues, au moins arrières dudit engin, permet de réduire les quantités de projections. Toutefois, ces bavettes ou garde-boue doivent être, notamment au niveau de remorques ou semi-remorques de camions, suffisamment éloignés du sol pour éviter un endommagement de ces bavettes ou garde-boue, en particulier lors des opérations de chargement ou de déchargement en quai. De ce fait, le bord libre inférieur de la bavette ou du garde-boue est généralement relativement écarté du sol, laissant libre un angle important de projections. Ces mêmes contraintes s'appliquent aux véhicules, notamment pendant les phases de stationnement de véhicules.

Pour tenter de résoudre ce problème, des solutions ont été imaginées comme l'illustrent en particulier les brevets FR 3 035 851 et US 5 582 431. Toutefois, de telles solutions ne donnent pas entièrement satisfaction. Le document US2018/273113A1 divulgue un dispositif de protection selon le préambule de la revendication 1.

Un but de l'invention est de proposer un dispositif de protection antiprojection du type précité dont la conception permet d'accroître l'efficacité du dispositif.

A cet effet, l'invention a pour objet un dispositif de protection antiprojection pour engin roulant comprenant au moins une roue d'appui au sol, le dispositif comprenant un écran antiprojection, apte à être disposé au moins partiellement à l'arrière de la roue , et un bâti support de l'écran, l'écran antiprojection présentant un bord supérieur, un bord inférieur et deux bords latéraux, cet écran antiprojection présentant une face apte à être tournée vers la roue à protéger et une face opposée appelée dos de l'écran, l'écran étant monté mobile par rapport au bâti support pour permettre, à l'état couplé du dispositif à l'engin, un déplacement de l'écran entre deux positions, l'une, dite haute, écartée du sol, l'autre, dite basse, rapprochée du sol, l'écran comprenant au moins une partie souple déformable perméable à l'eau formée d'un ensemble d'éléments discrets souples allongés, tels que des poils disposés côte à côte à la manière d'une brosse, chaque élément discret présentant une extrémité libre, au moins une partie des éléments discrets formant par leur extrémité libre, le bord inférieur de l'écran et se développant en direction du bord supérieur de l'écran, caractérisé en ce que le dispositif de protection antiprojection comprend un conformateur entourant au moins partiellement ledit écran, ledit conformateur étant configuré pour déformer l'écran dans le sens d'un rapprochement des bords latéraux et/ou des faces de l'écran lors du passage dudit écran de la position basse à la position haute. L'écran peut, grâce à la présence du conformateur, se déployer largement en position basse sans nuire à son encombrement réduit en position haute. Le large déploiement de l'écran en position basse peut permettre à l'écran de s'étendre au-delà du gabarit de la roue. Ce large déploiement de l'écran en position basse peut permettre également d'accroître l'épaisseur de l'écran prise entre sa face avant et son dos, ce qui à nouveau a pour effet d'augmenter l'efficacité de l'écran.

Selon un mode de réalisation de l'invention, l'écran est monté mobile à coulissement par rapport au bâti support. Il en résulte une simplicité du dispositif de protection et un faible encombrement du dispositif.

Selon un mode de réalisation de l'invention, le bâti support comprend au moins un tablier de type plaque, et l'écran est monté mobile en monte et baisse le long du tablier, à l'état positionné verticalement du tablier, pour le passage dudit écran d'une position haute, dans laquelle l'écran, et le tablier sont montés à recouvrement au moins partiel, à une position basse, dans laquelle l'écran fait saillie d'un bord dit bord transversal inférieur du tablier pour augmenter la surface du tablier. La présence d'un tel tablier qui peut être courbe permet de contrer au mieux certaines des projections.

Selon un mode de réalisation de l'invention, le tablier est bordé par deux ailes intégrant chacune un chemin de guidage en déplacement à coulissement de l'écran. Cette conception se caractérise par sa simplicité.

Selon un mode de réalisation de l'invention, l'écran est équipé d'organes de roulement, tels que des galets, aptes à rouler chacun dans un chemin de guidage des ailes du tablier.

Selon un mode de réalisation de l'invention, le conformateur est porté par le bâti support. Cette disposition simplifie le dispositif. Le conformateur est monté fixe sur le bâti support.

Selon un mode de réalisation de l'invention, le tablier est bordé, au niveau de son bord transversal inférieur, par un rebord muni d'ouvertures traversantes à travers lesquelles les extrémités libres des éléments discrets font saillie, chaque ouverture traversante formant une partie active du conformateur. La réalisation du conformateur sous forme d'une grille permet de manière simple de disposer d'un écran à un ou plusieurs rideaux avec chaque rideau conformable par le conformateur.

Selon un mode de réalisation de l'invention, chaque ouverture traversante a la forme d'une fente longitudinale avec l'axe longitudinal de la fente s'étendant sensiblement parallèlement au tablier.

Selon un mode de réalisation de l'invention, les éléments discrets de l'écran sont configurés pour former depuis l'une des faces en direction de l'autre face de l'écran un rideau ou une pluralité de rideaux séparés les uns des autres par une chambre en position basse de l'écran. La réalisation de l'écran sous forme d'une succession de rideaux permet de créer plusieurs volumes consécutifs dans lesquels l'énergie cinétique des projections est absorbée et les projections sont ramenées vers le sol afin que la pulvérisation d'origine soit totalement annulée.

Selon un mode de réalisation de l'invention, l'écran comprend, pour le ou chaque rideau, une partie rigide couplant les éléments discrets entre eux au niveau de l'extrémité des éléments discrets opposée à leur extrémité libre, et une base à laquelle la partie rigide est couplée à pivotement autour d'un axe coplanaire avec l'écran et transversal à la direction de monte et baisse de l'écran. Ce montage articulé permet d'aider au déploiement de l'écran lors du passage de la position haute à la position basse et à son rangement lors du passage de l'écran de la position basse à la position haute.

Selon un mode de réalisation de l'invention, le dispositif comprend, pour le déplacement de l'écran entre une position basse et une position haute, un système d'entraînement en déplacement à coulissement de l'écran.

Selon un mode de réalisation de l'invention, le système d'entraînement en déplacement à coulissement de l'écran comprend un mécanisme d'entraînement par engrenage en prise avec la vis d'un ensemble vis/écrou et un actionneur d'entraînement en déplacement de la vis ou de l'écrou. De préférence, l'actionneur est couplé à l'écran et est un actionneur d'entraînement en déplacement axial de l'écrou monté fixe en rotation sur la vis.

L'invention a encore pour objet un ensemble du type comprenant un engin roulant comprenant au moins une roue d'appui au sol et un dispositif de protection antiprojection apte à être associé à ladite roue pour protéger des projections résultant de la rotation de la roue au sol, ledit dispositif de protection antiprojection comprenant un écran antiprojection, apte à être disposé au moins partiellement à l'arrière de la roue , et un bâti support de l'écran, l'écran antiprojection présentant un bord supérieur, un bord inférieur et deux bords latéraux, cet écran antiprojection présentant une face apte à être tournée vers la roue à protéger et une face opposée appelée dos de l'écran, l'écran étant monté mobile par rapport au bâti support pour permettre, à l'état couplé du dispositif à l'engin, un déplacement de l'écran entre deux positions, l'une, dite haute, écartée du sol, l'autre, dite basse, rapprochée du sol, l'écran comprenant au moins une partie souple déformable, perméable à l'eau, formée d'un ensemble d'éléments discrets souples allongés, tels que des poils disposés côte à côte à la manière d'une brosse, chaque élément discret présentant une extrémité libre, au moins une partie des éléments discrets formant par leur extrémité libre le bord inférieur de l'écran et se développant en direction du bord supérieur de l'écran, caractérisé en ce que le dispositif de protection antiprojection est du type précité.

### Brève description des dessins

L'invention sera bien comprise à la lecture de la description suivante d'exemples de réalisation, en référence aux dessins annexés dans lesquels :

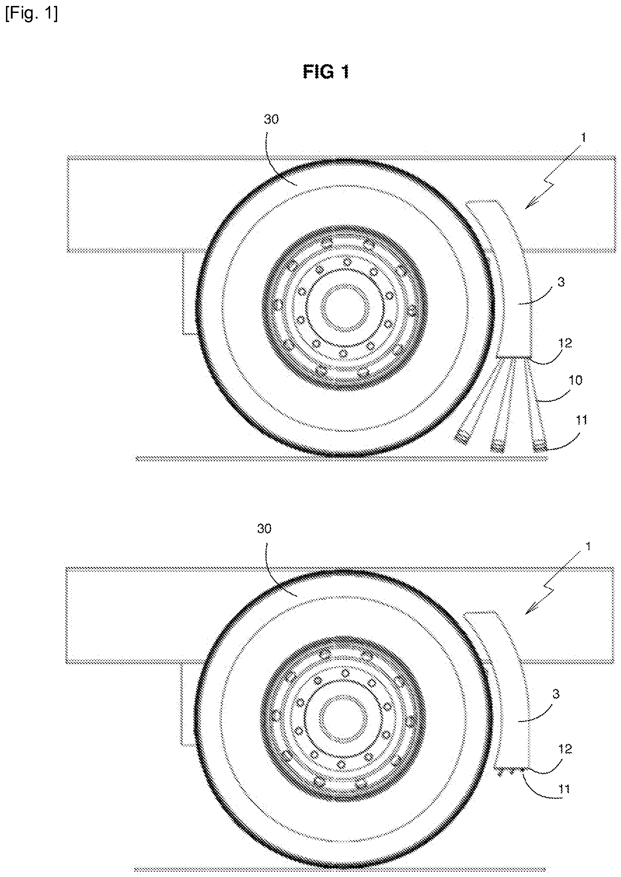

[Fig. 1] représente deux vues schématiques de côté d'un même dispositif de protection antiprojection associé à une roue, l'une des vues correspondant au dispositif en position basse de l'écran, l'autre en position haute de l'écran ;
[Fig. 2] représente deux vues schématiques de face d'un même dispositif de protection antiprojection associé à une roue, l'une des vues correspondant au dispositif en position basse de l'écran, l'autre en position haute de l'écran ;
[Fig. 3] représente deux vues schématiques de côté d'un même dispositif de protection antiprojection associé à une roue, l'une des vues correspondant au dispositif en position basse de l'écran, l'autre en position haute de l'écran, chaque représentation schématique étant associée à une vue de détail de l'écran dans la zone du conformateur ;
[Fig. 4] représente deux vues schématiques en perspective d'un même dispositif de protection antiprojection associé à une roue, l'une des vues correspondant au dispositif en position basse de l'écran, l'autre en position haute de l'écran ;

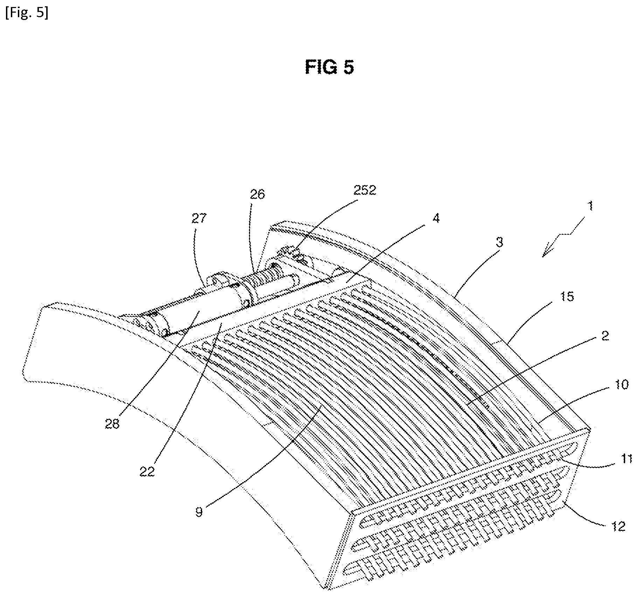

[Fig. 5] représente une vue en perspective d'un bâti support et du conformateur associé pour mieux visualiser les ouvertures traversantes du conformateur.

Comme mentionné ci-dessus, le dispositif 1 de protection antiprojection, objet de l'invention, est plus particulièrement destiné à équiper un engin roulant qui comprend au moins une roue 30 d'appui au sol. Cet engin roulant peut donc être par exemple une moto, une voiture, un camion tel qu'un semi-remorque ou tout autre engin roulant. Seule une partie du châssis de l'engin a été représentée dans les dessins.

Le dispositif 1 de protection peut être associé à la roue 30 d'appui au sol de l'engin disposée le plus à l'arrière de l'engin, pour éviter aux projections résultant de la rotation de la roue de faire saillie de l'arrière de l'engin. Ce dispositif 1 de protection peut, de manière similaire, est associé à une roue avant ou intermédiaire sans sortir du cadre de l'invention.

Ce dispositif comprend un écran 2 antiprojection apte à être disposé au moins partiellement à l'arrière de la roue 30. Cet écran 2 antiprojection présente un bord supérieur 4, un bord inférieur 5 et deux bords latéraux 6.

Cet écran 2 antiprojection présente une face 7 apte à être tournée vers la roue à protéger, et une face 8 opposée appelée dos de l'écran 2.

Ce dispositif 1 de protection antiprojection comprend encore un bâti 3 support de l'écran 2, qui peut affecter un grand nombre de formes. Le bâti 3 support peut indifféremment être fixé au châssis ou à l'essieu des roues de l'engin, en configuration d'utilisation du dispositif. Ce bâti 3 support peut encore être réalisé au moins partiellement d'une seule pièce, avec une partie par exemple du garde-boue de la roue 30 d'appui au sol de l'engin.

L'écran 2 est monté sur le bâti 3 support mobile par rapport au bâti 3 support, pour permettre un déplacement de l'écran 2 par rapport au bâti 3 support. Ainsi, lorsque le bâti 3 support est positionné à écartement du sol, l'écran 2 est monté mobile sur le bâti 3 support, pour permettre un déplacement de l'écran 2 entre deux positions, l'une dite haute écartée du sol, l'autre dite basse rapprochée du sol. Tel est le cas à l'état couplé du dispositif 1 à l'engin.

Dans les exemples représentés, l'écran 2 est monté mobile à coulissement par rapport au bâti 3 support. En particulier, le bâti 3 support comprend au moins un tablier 13 de type plaque, et l'écran 2 est monté mobile en monte et baisse le long du tablier 13 à l'état positionné verticalement du tablier 13 pour le passage dudit écran 2 d'une position haute dans laquelle l'écran 2 et le tablier 13 sont montés à recouvrement au moins partiel à une position basse dans laquelle l'écran 2 fait saillie du bord transversal inférieur 14 du tablier 3 pour augmenter la surface du tablier 13.

Le tablier 13 dont la plaque est une plaque cintrée qui suit le rayon de courbure de la roue est ainsi disposé entre l'écran 2 et la roue 30, en position haute de l'écran 2, comme illustré aux figures.

L'écran 2 fait face par sa face 7 opposée à son dos, au tablier 13. Dans les exemples représentés, le tablier 13 est bordé par deux ailes 15 intégrant chacune un chemin 16 de guidage en déplacement à coulissement de l'écran 2. Les ailes 15 sont parallèles entre elles. Elles font saillie de la face de la plaque de tablier opposée à celle tournée vers la roue. Ce chemin 16 de guidage, intégré dans chaque aile 15, affecte la forme d'une lumière oblongue formant rail pour un organe 17 de roulement équipant l'écran 2.

En effet, l'écran 2 est équipé d'organes 17 de roulement tels que des galets, aptes à rouler chacun dans un chemin 16 de guidage des ailes 15.

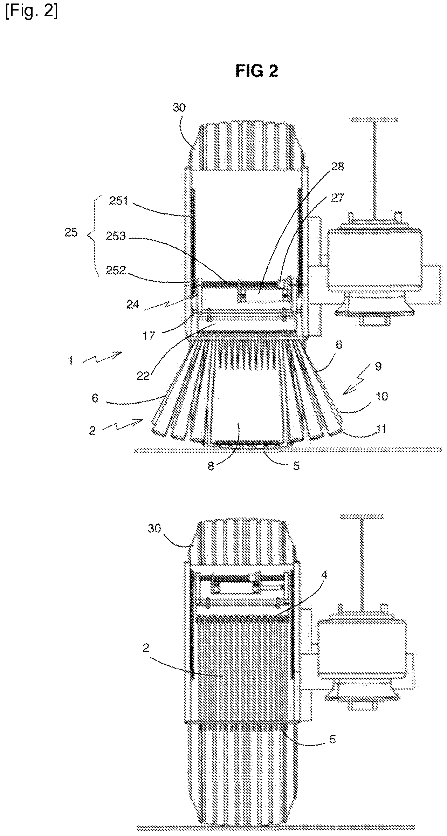

Comme illustré par exemple à la figure 2, l'écran 2 comprend au moins une partie souple 9 déformable, perméable à l'eau, formée d'un ensemble d'éléments 10 discrets souples allongés, tels que des poils, disposés côte à côte à la manière d'une brosse. Chaque élément 10 discret présente une extrémité libre 11. Au moins une partie des éléments 10 discrets forment, par leur extrémité libre 11, le bord inférieur 5 de l'écran 2 et se développent en direction du bord supérieur 4 de l'écran 2.

Au niveau de leur extrémité opposée à leur extrémité libre 11, ces éléments 10 discrets peuvent être reliés entre eux par groupes ou sous forme d'un groupe unique à une ou plusieurs parties 22 rigides de l'écran, qui seront décrites ci-après.

De manière caractéristique à l'invention, le dispositif 1 de protection antiprojection comprend un conformateur 12 entourant au moins partiellement ledit écran 2 sur au moins une partie de la hauteur de l'écran 2 prise entre le bord supérieur et le bord inférieur de l'écran 2. Ce conformateur 12 est configuré pour déformer l'écran 2 dans le sens d'un rapprochement des bords latéraux 6 de l'écran entre eux et/ou dans le sens d'un rapprochement des faces 7 et 8 de l'écran 2 entre elles lors du passage dudit écran 2 de la position basse à la position haute.

Ainsi, la largeur de l'écran prise entre les bords latéraux 6 de l'écran est apte à diminuer lors du passage de l'écran 2 de la position basse à la position haute et/ou l'épaisseur de l'écran prise entre les faces 7 et 8 de l'écran est apte à diminuer lors du passage de l'écran 2 de la position basse à la position haute.

En pratique, le conformateur 12 est porté par le bâti 3 support, en particulier, le conformateur 12 et le bâti 3 support sont réalisés d'une seule pièce. Dans les exemples représentés, le tablier 13 est bordé, au niveau de son bord transversal inférieur 14, par un rebord 18 muni d'ouvertures 19 traversantes à travers lesquelles les extrémités libres 11 des éléments 10 discrets de l'écran 2 font saillie.

Chaque ouverture 19 traversante forme une partie dite active du conformateur 12.

Chaque ouverture 19 traversante affecte ici la forme d'une fente longitudinale avec l'axe longitudinal de la fente s'étendant sensiblement parallèlement au tablier 13, en particulier à la plaque du tablier 13. Ainsi, chaque fente s'étend transversalement aux ailes 15 du tablier 13 et transversalement à l'axe longitudinal de l'engin. Le conformateur 12 peut comprendre plusieurs fentes parallèles, comme dans l'exemple représenté, ou une seule fente, selon la conception souhaitée pour l'écran 2. Le conformateur 12 se présente donc ici à la marnière d'une grille sous forme d'une surface ajourée munie d'une ou plusieurs fentes longitudinales parallèles. Bien évidemment, le conformateur 12 peut présenter d'autres formes telles que la forme d'un simple cadre entourant l'écran. Ce cadre contraint les éléments discrets de l'écran à se rapprocher les uns des autres au niveau de leur extrémité libre en position haute de l'écran. En position basse de l'écran, les extrémités libres des éléments discrets libres de toute contrainte tendent à s'écarter les uns des autres et l'encombrement de l'écran augmente. Dans cette position basse de l'écran, le conformateur s'étend au niveau de l'extrémité des éléments discrets opposée à l'extrémité libre des éléments discrets. L'écran 2 peut former, depuis sa face 7 avant en direction de son dos, un rideau 20 lorsque le conformateur comprend une seule fente, ou une pluralité de rideaux 20 séparés les uns des autres par une chambre 21 en position basse de l'écran 2 lorsque le conformateur comprend plusieurs fentes.

Chaque chambre 21 est formée par l'espace laissé libre entre deux rideaux 20 d'éléments 10 discrets.

Chaque rideau est formé par les éléments 10 discrets logés à l'intérieur d'une fente.

Chaque fente est positionnée au niveau du bord inférieur de l'écran 2, c'est-à-dire au niveau des extrémités libres des éléments 10 discrets, en position haute de l'écran 2.

Les bords de la fente contraignent les extrémités libres des éléments 10 discrets à se rapprocher le plus possible les unes des autres pour limiter leur encombrement.

Lorsque l'écran 2 s'abaisse, les extrémités libres des éléments 10 discrets et la partie des éléments 10 discrets jouxtant les extrémités libres sont libérées de l'action du conformateur, au fur et à mesure de l'abaissement de l'écran 2, de sorte que les extrémités libres 11 des éléments 10 discrets libérés de toute contrainte peuvent s'écarter les unes des autres pour former un écran de plus grande dimension que sa dimension en position haute de stockage entre les ailes du tablier du bâti support.

Pour aider au mieux au déploiement des éléments 10 discrets lors du passage de la position haute à la position basse de l'écran, l'écran comprend, pour le ou chaque rideau 20, une partie rigide 22 couplant les éléments 10 discrets entre eux au niveau de l'extrémité des éléments 10 discrets opposée à leur extrémité libre 11, et une base 23 à laquelle la partie rigide 22 est couplée à pivotement autour d'un axe transversal à la direction de monte et baisse de l'écran 2.

Ainsi, chaque série d'éléments 10 discrets qui forme un rideau peut librement s'orienter au fur et à mesure du déplacement de l'écran 2 entre ces différentes positions, pour éviter tout coincement.

Pour permettre un déplacement en monte et baisse de l'écran 2 par rapport au bâti 3 support et au conformateur 12, le dispositif 1 de protection antiprojection comprend un système 24 d'entraînement en déplacement à coulissement de l'écran 2 le long du bâti support. Ce système 24 d'entraînement en déplacement à coulissement de l'écran 2 peut affecter un grand nombre de formes.

Dans l'exemple représenté, le système 24 d'entraînement en déplacement à coulissement de l'écran 2 comprend un mécanisme 25 d'entraînement par engrenage en prise avec la vis 26 d'un ensemble vis 26 écrou 27 et un actionneur 28 d'entraînement en déplacement de la vis 26 ou de l'écrou 27.

En particulier, et comme illustré aux figures 2 à 4, le mécanisme 25 d'entraînement par engrenage comprend deux crémaillères 251 s'étendant de manière parallèle le long du tablier 13, parallèlement à une aile 15 de la plaque du tablier 13, côté face de la plaque opposée à celle tournée vers la roue.

Le mécanisme 25 d'entraînement par engrenage comprend encore deux pignons 252 portés par une même tige 253. Ces pignons 252 sont disposés l'un à l'une des extrémités, l'autre à l'autre des extrémités de la tige 253. Chaque pignon 252 vient en prise avec une crémaillère 251.

La tige 253 forme une vis 26. Cette vis 26 constitue la vis d'un ensemble vis 26/écrou 27. L'écrou 27 est vissé sur la vis 26. Cet écrou 27 est monté fixe en rotation sur la vis 26, et déplaçable axialement le long de la vis 26 par un actionneur 28. Cet actionneur 28 est ici un vérin avec l'écrou 27 couplé à la partie mobile du vérin formée ici par le corps du vérin. Cet ensemble vis/écrou et la partie fixe du vérin sont couplés à l'écran 2, en particulier à la partie 22 rigide de l'écran 2. Cette partie 22 rigide de l'écran 2 porte déjà les organes 17 de roulement se logeant dans le chemin 16 de guidage du bâti 3 support.

Le fonctionnement est tel que suit : la translation de l'écrou 27 le long de la vis 26 générée par l'actionneur 28, à savoir par une extension ou une rétraction du vérin constitutif de l'actionneur 28, produit un entraînement en rotation de la vis 26, et par conséquent la rotation des pignons disposés à l'extrémité de la vis 26. Ces pignons 252 progressent le long des crémaillères 251. Cette progression se traduit par un déplacement en montée ou en descente de l'écran 2 selon le sens de déplacement axial de l'écran 2.

Dans les exemples représentés, la rotation de l'écrou est bloquée par une bielle de réaction. On note que la présence de deux pignons 252 en prise avec deux crémaillères 251 permet à l'écran 2 de progresser de manière identique au niveau de chacun de ses bords 6 latéraux.

La réalisation de l'actionneur 28 sous forme d'un vérin permet de s'affranchir d'un détecteur de fin de course.

L'actionnement de l'actionneur 28, qui peut être un actionneur hydraulique ou pneumatique, peut être commandé en fonction de différents paramètres, à savoir par exemple la détection d'une route mouillée, la détection de la pluie, la détection d'une commande effectuée par l'opérateur, la vitesse de rotation de la roue ou le déplacement du véhicule...

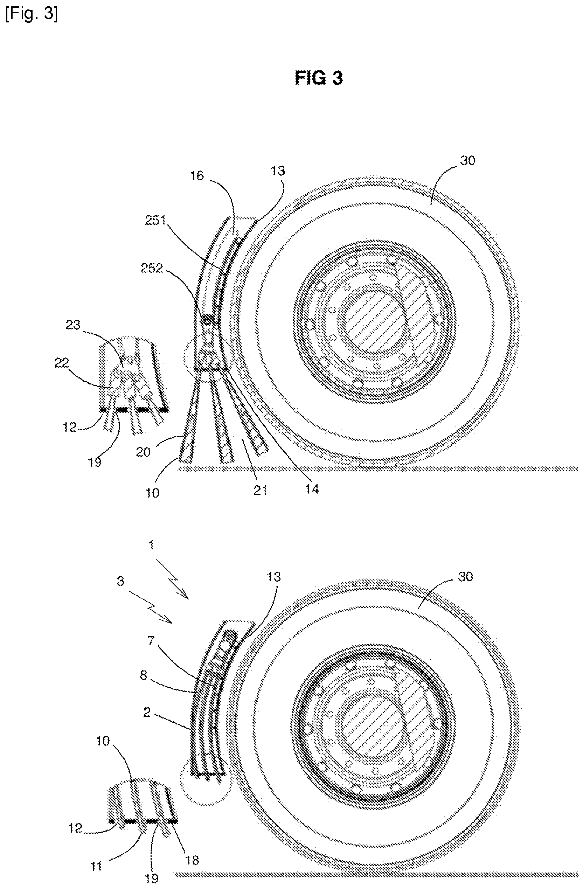

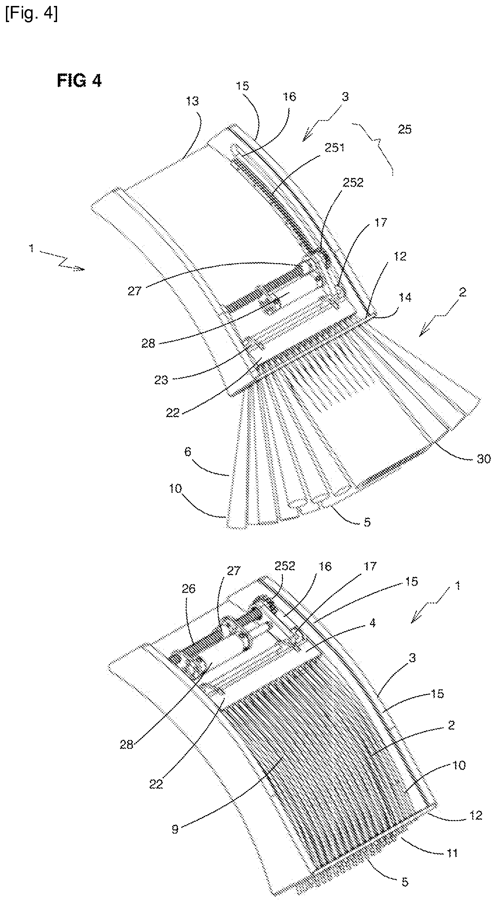

À cet effet, le dispositif 1 peut comprendre une unité de commande de l'actionneur 28 configurée pour acquérir des données d'un capteur de vitesse et/ou d'un capteur de pluie et/ou d'un organe de commande manuelle et/ou d'un autre type de capteur. L'actionnement de l'actionneur 28 dans le sens d'un déplacement de l'écran de la position haute à la position basse permet aux éléments 10 discrets de se déployer comme illustré dans la vue de droite, à la figure 4, pour occuper une position dans laquelle certains éléments 10 discrets peuvent s'étendre au-delà de la largeur de la roue, comme cela est visible à la figure 2 ou former des rideaux 20 successifs séparés par des chambres 21 comme illustré à la vue de droite de la figure 3.

L'efficacité du dispositif est ainsi accrue sans risque de blessure de tiers, notamment en raison du caractère souple des éléments 10 discrets qui, dans l'exemple représenté, sont des poils en matière de synthèse, en particulier en polyamide.

Le bâti support 3 affecte ici la forme d'un corps de boîtier ouvert au niveau de son côté supérieur, et dépourvu de capot. Le bâti support 3 aurait pu, de manière similaire, affecter la forme d'un boîtier fermé ou d'une cassette, le corps du boîtier étant fermé par un capot pour venir masquer le dispositif d'entraînement en déplacement de l'écran et protéger l'écran 2 en position haute de l'écran 2.

L'invention concerne bien évidemment également l'ensemble formé d'un engin roulant et d'au moins un dispositif 1 de protection antiprojection tel que décrit ci-dessous.

## Revendications

1. Dispositif (1) de protection antiprojection pour engin roulant comprenant au moins une roue (30) d'appui au sol, le dispositif (1) comprenant un écran (2) antiprojection, apte à être disposé au moins partiellement à l'arrière de la roue (30), et un bâti (3) support de l'écran (2), l'écran (2) antiprojection présentant un bord supérieur (4), un bord inférieur (5) et deux bords latéraux (6), cet écran (2) antiprojection présentant une face (7) apte à être tournée vers la roue à protéger et une face (8) opposée appelée dos de l'écran (2), l'écran (2) étant monté mobile par rapport au bâti (3) support pour permettre, à l'état couplé du dispositif (1) à l'engin, un déplacement de l'écran (2) entre deux positions, l'une, dite haute, écartée du sol, l'autre, dite basse, rapprochée du sol, l'écran (2) comprenant au moins une partie souple (9) déformable perméable à l'eau formée d'un ensemble d'éléments (10) discrets souples allongés, tels que des poils, disposés côte à côte à la manière d'une brosse, chaque élément (10) discret présentant une extrémité libre (11), au moins une partie des éléments (10) discrets formant par leur extrémité libre (11), le bord inférieur (5) de l'écran (2) et se développant en direction du bord supérieur (4) de l'écran (2), **caractérisé en ce que** le dispositif (1) de protection antiprojection comprend un conformateur (12) entourant au moins partiellement ledit écran (2), ledit conformateur (12) étant configuré pour déformer l'écran (2) dans le sens d'un rapprochement des bords latéraux (6) et/ou des faces (7, 8) de l'écran (2) lors du passage dudit écran (2) de la position basse à la position haute.

2. Dispositif (1) de protection antiprojection pour engin roulant selon la revendication 1, **caractérisé en ce que** l'écran (2) est monté mobile à coulissement par rapport au bâti (3) support.

3. Dispositif (1) de protection antiprojection pour engin roulant selon l'une des revendications 1 ou 2, **caractérisé en ce que** le bâti (3) support comprend au moins un tablier (13) de type plaque, et **en ce que** l'écran (2) est monté mobile en monte et baisse le long du tablier (13), à l'état positionné verticalement du tablier (13), pour le passage dudit écran (2) d'une position haute, dans laquelle l'écran (2) et le tablier (13) sont montés à recouvrement au moins partiel, à une position basse, dans laquelle l'écran (2) fait saillie d'un bord dit bord transversal inférieur (14) du tablier (13) pour augmenter la surface du tablier (13).

4. Dispositif (1) de protection antiprojection pour engin roulant selon la revendication 3, **caractérisé en ce que** le tablier (13) est bordé par deux ailes (15) intégrant chacune un chemin (16) de guidage en déplacement à coulissement de l'écran (2).

5. Dispositif (1) de protection antiprojection pour engin roulant selon la revendication 4, **caractérisé en ce que** l'écran (2) est équipé d'organes (17) de roulement, tels que des galets, aptes à rouler chacun dans un chemin (16) de guidage des ailes (15) du tablier (13).

6. Dispositif (1) de protection antiprojection pour engin roulant selon l'une des revendications 1 à 5, **caractérisé en ce que** le conformateur (12) est porté par le bâti (3) support.

7. Dispositif (1) de protection antiprojection pour engin roulant selon la revendication 6 prise en combinaison avec la revendication 3, **caractérisé en ce que** le tablier (13) est bordé, au niveau de son bord transversal inférieur (14), par un rebord (18) muni d'ouvertures (19) traversantes à travers lesquelles les extrémités libres (11) des éléments (10) discrets font saillie, chaque ouverture (19) traversante formant une partie active du conformateur (12).

8. Dispositif (1) de protection antiprojection pour engin roulant selon la revendication 7, **caractérisé en ce que** chaque ouverture (19) traversante a la forme d'une fente longitudinale avec l'axe longitudinal de la fente s'étendant sensiblement parallèlement au tablier (13).

9. Dispositif (1) de protection antiprojection pour engin roulant selon l'une des revendications 1 à 8, **caractérisé en ce que** les éléments (10) discrets de l'écran (2) sont configurés pour former depuis l'une (7) des faces (7, 8) en direction de l'autre face (8) de l'écran (2) un rideau (20) ou une pluralité de rideaux (20) séparés les uns des autres par une chambre (21) en position basse de l'écran (2).

10. Dispositif (1) de protection antiprojection pour engin roulant selon la revendication 9, **caractérisé en ce que** l'écran (2) comprend, pour le ou chaque rideau (20), une partie rigide (22) couplant les éléments (10) discrets entre eux au niveau de l'extrémité des éléments (10) discrets opposée à leur extrémité libre (11), et une base (23) à laquelle la partie rigide (22) est couplée à pivotement autour d'un axe coplanaire avec l'écran et transversal à la direction de monte et baisse de l'écran (2).

11. Dispositif (1) de protection antiprojection pour engin roulant selon l'une des revendications 1 à 10, **caractérisé en ce que** le dispositif (1) comprend, pour le déplacement de l'écran entre une position basse et une position haute, un système (24) d'entraînement en déplacement à coulissement de l'écran.

12. Dispositif (1) de protection antiprojection pour engin roulant selon la revendication 11, **caractérisé en ce que** le système (24) d'entraînement en déplacement à coulissement de l'écran (2) comprend un mécanisme (25) d'entraînement par engrenage en prise avec la vis (26) d'un ensemble vis (26)/écrou (27) et un actionneur (28) d'entraînement en déplacement de la vis (26) ou de l'écrou (27).

13. Ensemble du type comprenant un engin roulant comprenant au moins une roue (30) d'appui au sol et un dispositif (1) de protection antiprojection apte à être associé à ladite roue (30) pour protéger des projections résultant de la rotation de la roue au sol, ledit dispositif (1) de protection antiprojection comprenant un écran (2) antiprojection, apte à être disposé au moins partiellement à l'arrière de la roue (30), et un bâti (3) support de l'écran (2), l'écran (2) antiprojection présentant un bord supérieur (4), un bord inférieur (5) et deux bords latéraux (6), cet écran (2) antiprojection présentant une face (7) apte à être tournée vers la roue (30) à protéger et une face (8) opposée appelée dos de l'écran (2), l'écran (2) étant monté mobile par rapport au bâti (3) support pour permettre, à l'état couplé du dispositif (1) à l'engin, un déplacement de l'écran (2) entre deux positions, l'une, dite haute, écartée du sol, l'autre, dite basse, rapprochée du sol, l'écran (2) comprenant au moins une partie souple (9) déformable, perméable à l'eau, formée d'un ensemble d'éléments (10) discrets souples allongés, tels que des poils, disposés côte à côte à la manière d'une brosse, chaque élément discret présentant une extrémité libre (11), au moins une partie des éléments (10) discrets formant par leur extrémité libre (10) le bord inférieur (5) de l'écran (2) et se développant en direction du bord supérieur (4) de l'écran (2), **caractérisé en ce que** le dispositif (1) de protection antiprojection est conforme à l'une des revendications 1 à 12.

## Patentansprüche

1. Spritzschutzvorrichtung (1) für ein Radfahrzeug, das mindestens ein auf dem Boden aufliegendes Rad (30) beinhaltet, wobei die Vorrichtung (1) einen Spritzschutzschirm (2), der dazu fähig ist, mindestens teilweise hinter dem Rad (30) angeordnet zu sein, und einen Halteträger (3) für den Schirm (2) beinhaltet, wobei der Spritzschutzschirm (2) einen oberen Rand (4), einen unteren Rand (5) und zwei Seitenränder (6) aufweist, wobei dieser Spritzschutzschirm (2) eine Seite (7), die dazu fähig ist, zu dem zu schützenden Rad zu zeigen, und eine gegenüberliegende Seite (8), als Rückseite des Schirms (2) bezeichnet, aufweist, wobei der Schirm (2) in Bezug auf den Halteträger (3) mobil montiert ist, um in dem gekoppelten Zustand der Vorrichtung (1) mit dem Fahrzeug eine Bewegung des Schirms (2) zwischen zwei Positionen, einer, die als obere bezeichnet wird und von dem Boden entfernt ist, und einer anderen, die als untere bezeichnet wird und dem Boden angenähert ist, zu gestatten, wobei der Schirm (2) mindestens einen wasserdurchlässigen, verformbaren, flexiblen Teil (9) beinhaltet, der aus einer Anordnung von länglichen, flexiblen, diskreten Elementen (10) gebildet ist, wie Haare, die in der Art einer Bürste nebeneinander angeordnet sind, wobei jedes diskrete Element (10) ein freies Ende (11) aufweist, wobei mindestens ein Teil der diskreten Elemente (10) durch ihr freies Ende (11) den unteren Rand (5) des Schirms (2) bilden und sich in Richtung des oberen Randes (4) des Schirms (2) erstrecken, **dadurch gekennzeichnet, dass** die Spritzschutzvorrichtung (1) einen Former (12) beinhaltet, der den Schirm (2) mindestens teilweise umgibt, wobei der Former (12) dazu konfiguriert ist, den Schirm (2) im Sinne einer Annäherung der Seitenränder (6) und/oder der Seiten (7, 8) des Schirms (2) zu verformen, während der Schirm (2) von der unteren Position in die obere Position übergeht.

2. Spritzschutzvorrichtung (1) für ein Radfahrzeug nach Anspruch 1, **dadurch gekennzeichnet, dass** der Schirm (2) in Bezug auf den Halteträger (3) verschiebbar montiert ist.

3. Spritzschutzvorrichtung (1) für ein Radfahrzeug nach einem der Ansprüche 1 oder 2, **dadurch gekennzeichnet, dass** der Halteträger (3) mindestens eine Schürze (13) vom Typ Platte beinhaltet und dass der Schirm (2) im vertikal positionierten Zustand der Schürze (13) entlang der Schürze (13) auf und ab bewegbar montiert ist, damit der Schirm (2) von einer oberen Position, in der der Schirm (2) und die Schürze (13) sich teilweise überlappend montiert sind, in eine untere Position, in der der Schirm (2) von einem Rand, der als quer verlaufender unterer Rand (14) der Schürze (13) bezeichnet wird, vorsteht, um die Oberfläche der Schürze (13) zu vergrößern, übergehen kann.

4. Spritzschutzvorrichtung (1) für ein Radfahrzeug nach Anspruch 3, **dadurch gekennzeichnet, dass** die Schürze (13) von zwei Flügeln (15) eingefasst wird, die jeweils über einen Weg (16) zum verschiebebeweglichen Führen des Schirms (2) verfügen.

5. Spritzschutzvorrichtung (1) für ein Radfahrzeug nach Anspruch 4, **dadurch gekennzeichnet, dass** der Schirm (2) mit Wälzkörpern (17), wie etwa Rollen, ausgerüstet ist, die dazu fähig sind, jeweils in einem Führungsweg (16) der Flügel (15) der Schürze (13) zu rollen.

6. Spritzschutzvorrichtung (1) für ein Radfahrzeug nach einem der Ansprüche 1 bis 5, **dadurch gekennzeichnet, dass** der Former (12) von dem Halteträger (3) getragen wird.

7. Spritzschutzvorrichtung (1) für ein Radfahrzeug nach Anspruch 6 in Kombination mit Anspruch 3, **dadurch gekennzeichnet, dass** die Schürze (13) im Bereich ihres quer verlaufenden unteren Randes (14) von einer Einfassung (18) eingefasst wird, die über Durchgangsöffnungen (19) verfügt, durch die die freien Enden (11) der diskreten Elemente (10) vorstehen, wobei jede Durchgangsöffnung (19) einen aktiven Teil des Formers (12) bildet.

8. Spritzschutzvorrichtung (1) für ein Radfahrzeug nach Anspruch 7, **dadurch gekennzeichnet, dass** jede Durchgangsöffnung (19) die Form eines Längsschlitzes aufweist, wobei sich die Längsachse des Schlitzes im Wesentlichen parallel zu der Schürze (13) erstreckt.

9. Spritzschutzvorrichtung (1) für ein Radfahrzeug nach einem der Ansprüche 1 bis 8, **dadurch gekennzeichnet, dass** die diskreten Elemente (10) des Schirms (2) dazu konfiguriert sind, von einer (7) der Seiten (7, 8) in Richtung der anderen Seite (8) des Schirms (2) einen Vorhang (20) oder eine Vielzahl von Vorhängen (20), die in der unteren Position des Schirms (2) durch einen Raum (21) voneinander getrennt sind, zu bilden.

10. Spritzschutzvorrichtung (1) für ein Radfahrzeug nach Anspruch 9, **dadurch gekennzeichnet, dass** der Schirm (2) für den oder jeden Vorhang (20) einen starren Teil (22), der die diskreten Elemente (10) im Bereich des Endes der diskreten Elemente (10), das zu ihrem freien Ende (11) entgegengesetzt ist, miteinander koppelt, und eine Basis (23), mit der der starre Teil (22) um eine zu dem Schirm komplanare und zu der Auf- und Abrichtung des Schirms (2) quer verlaufende Achse schwenkbar gekoppelt ist, beinhaltet.

11. Spritzschutzvorrichtung (1) für ein Radfahrzeug nach einem der Ansprüche 1 bis 10, **dadurch gekennzeichnet, dass** die Vorrichtung (1) für die Bewegung des Schirms zwischen einer unteren Position und einer oberen Position ein System (24) zum verschiebebeweglichen Antreiben des Schirms beinhaltet.

12. Spritzschutzvorrichtung (1) für ein Radfahrzeug nach Anspruch 11, **dadurch gekennzeichnet, dass** das System (24) zum verschiebebeweglichen Antreiben des Schirms (2) einen Verzahnungsantriebsmechanismus (25) in Eingriff mit der Schraube (26) einer Anordnung aus Schraube (26)/Mutter (27) und einen Aktuator (28) zum beweglichen Antreiben der Schraube (26) oder der Mutter (27) beinhaltet.

13. Anordnung des Typs, der ein Radfahrzeug, das mindestens ein auf dem Boden aufliegendes Rad (30) beinhaltet, und eine Spritzschutzvorrichtung (1) beinhaltet, die dazu fähig ist, mit dem Rad (30) assoziiert zu sein, um vor den Spritzern zu schützen, die sich aus dem Drehen des Rades am Boden ergeben, wobei die Spritzschutzvorrichtung (1) einen Spritzschutzschirm (2), der dazu fähig ist, mindestens teilweise hinter dem Rad (30) angeordnet zu sein, und einen Halteträger (3) für den Schirm (2) beinhaltet, wobei der Spritzschutzschirm (2) einen oberen Rand (4), einen unteren Rand (5) und zwei Seitenränder (6) aufweist, wobei dieser Spritzschutzschirm (2) eine Seite (7), die dazu fähig ist, zu dem zu schützenden Rad (30) zu zeigen, und eine gegenüberliegende Seite (8), als Rückseite des Schirms (2) bezeichnet, aufweist, wobei der Schirm (2) in Bezug auf den Halteträger (3) mobil montiert ist, um in dem gekoppelten Zustand der Vorrichtung (1) mit dem Fahrzeug eine Bewegung des Schirms (2) zwischen zwei Positionen, einer, die als obere bezeichnet wird und von dem Boden entfernt ist, und einer anderen, die als untere bezeichnet wird und dem Boden angenähert ist, zu gestatten, wobei der Schirm (2) mindestens einen wasserdurchlässigen, verformbaren, flexiblen Teil (9) beinhaltet, der aus einer Anordnung von länglichen, flexiblen, diskreten Elementen (10) gebildet ist, wie Haare, die in der Art einer Bürste nebeneinander angeordnet sind, wobei jedes diskrete Element ein freies Ende (11) aufweist, wobei mindestens ein Teil der diskreten Elemente (10) durch ihr freies Ende (11) den unteren Rand (5) des Schirms (2) bilden und sich in Richtung des oberen Randes (4) des Schirms (2) erstrecken, **dadurch gekennzeichnet, dass** die Spritzschutzvorrichtung (1) einem der Ansprüche 1 bis 12 entspricht.

## Claims

1. A splashguard device (1) for a wheeled vehicle comprising at least one wheel (30) resting on the ground, the device (1) comprising a splashguard (2) adapted to be disposed at least partly to the rear of the wheel (30) and a supporting structure (3) supporting the guard (2), the splashguard (2) having an upper edge (4), a lower edge (5) and two lateral edges (6), this splashguard (2) having a face (7) adapted to face toward the wheel that is to be protected and an opposite face (8) termed the back of the guard (2), the guard (2) being mounted with the ability to move relative to the supporting structure (3) so that when the device (1) is coupled to the vehicle the guard (2) can be moved between two positions, one a so-called raised position away from the ground, the other a so-called lowered position close to the ground, the guard (2) comprising at least one deformable flexible water-permeable part (9) formed of a collection of discrete elongate flexible elements (10), such as bristles, disposed side-by-side in the manner of a brush, each discrete element (10) having a free end (11), at least some of the discrete elements (10) forming, via their free end (11), the lower edge (5) of the guard (2) and extending in the direction of the upper edge (4) of the guard (2), **characterized in that** the splashguard device (1) comprises a shaper (12) at least partially surrounding said guard (2), said shaper (12) being configured to deform the guard (2) in the direction that moves the lateral edges (6) and/or the faces (7, 8) of the guard (2) closer together as said guard (2) moves from the lowered position to the raised position.

2. The wheeled vehicle splashguard device (1) as claimed in claim 1 **characterized in that** the guard (2) is mounted to be mobile in sliding relative to the supporting structure (3).

3. The wheeled vehicle splashguard device (1) as claimed in either one of claims 1 or 2 **characterized in that** the supporting structure (3) comprises at least one plate type apron (13) and **in that** the guard (2) is mounted to be mobile up and down the apron (13) in the vertically positioned state of the apron (13) for the movement of said guard (2) from a raised position in which the guard (2) and the apron (13) overlap at least partially and a lowered position in which the guard (2) projects from a so-called lower transverse edge (14) of the apron (13) to increase the area of the apron (13).

4. The wheeled vehicle splashguard device (1) as claimed in claim 3 **characterized in that** the apron (13) is flanked by two flanges (15) each integrating a path (16) for guiding sliding movement of the guard (2).

5. The wheeled vehicle splashguard device (1) as claimed in claim 4 **characterized in that** the guard (2) is equipped with rolling members (17), such as rollers, each adapted to roll in a guide path (16) of the flanges (15) of the apron (13).

6. The wheeled vehicle splashguard device (1) as claimed in any one of claims 1 to 5 **characterized in that** the shaper (12) is carried by the supporting structure (3).

7. The wheeled vehicle splashguard device (1) as claimed in claim 6 in combination with claim 3 **characterized in that** the apron (13) is flanked at the level of its lower transverse edge (14) by a rim (18) provided with through-openings (19) through which the free ends (11) of the discrete elements (10) project, each through-opening (19) forming an active part of the shaper (12).

8. The wheeled vehicle splashguard device (1) as claimed in as claimed in claim 7 **characterized in that** each through-opening (19) is in the form of a longitudinal slot with the longitudinal axis of the slot extending substantially parallel to the apron (13).

9. The wheeled vehicle splashguard device (1) as claimed in any one of claim 1 to 8 **characterized in that** the discrete elements (10) of the guard (2) are configured to form from one face (7) of the faces (7, 8) in the direction of the other face (8) of the guard (2) a curtain (20) or a plurality of curtains (20) separated from one another by a chamber (21) in the lowered position of the guard (2).

10. The wheeled vehicle splashguard device (1) as claimed in claim 9 **characterized in that** the guard (2) comprises, for the or each curtain (20), a rigid part (22) coupling the discrete elements (10) to one another at the level of the end of the discrete elements (10) opposite their free end (11) and a base (23) to which the rigid part (22) is coupled to pivot about an axis coplanar with the guard and transverse to the direction of raising and lowering the guard (2).

11. The wheeled vehicle splashguard device (1) as claimed in any one of claims 1 to 10 **characterized in that** the device (1) comprises, for the movement of the guard between a lowered position and a raised position, a system (24) for driving sliding movement of the guard.

12. The wheeled vehicle splashguard device (1) as claimed in claim 11 **characterized in that** the system (24) for driving sliding movement of the guard (2) comprises a gear drive mechanism (25) meshing with the bolt (26) of a bolt (26)/nut (27) assembly and an actuator (28) for driving movement of the bolt (26) or of the nut (27).

13. An assembly of the type comprising a wheeled vehicle comprising at least one wheel (30) resting on the ground and a splashguard device (1) adapted to be associated with said wheel (30) to protect against splashing resulting from the rotation of the wheel on the ground, said splashguard device (1) comprising a splashguard (2) adapted to be disposed at least partially to the rear of the wheel (30) and a structure (3) supporting the guard (2), the splashguard (2) having an upper edge (4), a lower edge (5) and two lateral edges (6), this splashguard (2) having a face (7) adapted to face toward the wheel (30) to be protected and an opposite face (8) referred to as the back of the guard (2), the guard (2) being mounted to be mobile relative to the supporting structure (3) to enable, in the state with the device (1) coupled to the vehicle, movement of the guard (2) between two positions, one, termed raised, away from the ground, the other, termed lowered, close to the ground, the guard (2) comprising at least one deformable flexible part (9) permeable to water formed of a collection of discrete elongate flexible elements (10), such as bristles, disposed side-by-side in the manner of a brush, each discrete element having a free end (11), at least some of the discrete elements (10) forming via their free end (11) the lower edge (5) of the guard (2) and extending in the direction of the upper edge (4) of the guard (2), **characterized in that** the splashguard device (1) conforms to any one of claims 1 to 12.
